# EUROPEAN PATENT SPECIFICATION

(11) **EP 2 860 837 B1**
(45) Date of publication and mention of the grant of the patent: **17.03.2021**
(21) Application number: 14187376.0
(22) Date of filing: 01.10.2014
(51) Int. Cl.: H02H 3/08, H02H 1/06

(54) **Virtual circuit breaker**
Virtueller Schutzschalter
Disjoncteur de circuit virtuel

(30) Priority: 02.10.2013 US 201314044303
(43) Date of publication of application: 15.04.2015
(73) Proprietor: Astronics Advanced Electronic Systems Corp., Kirkland, WA 98034 (US)
(72) Inventor: Vaziri, Massoud, Redmond, WA Washington 98052 (US)
(74) Representative: Manitz Finsterwald Patent- und Rechtsanwaltspartnerschaft mbB

(56) References cited:
- US-A- 4 346 424
- US-A1- 2011 222 200
- US-A1- 2012 275 071

## Description

### FIELD OF THE DISCLOSURE

The subject matter of the present disclosure generally relates to circuit control devices, and more particularly relates to circuit breakers utilizing microprocessors.

### BACKGROUND OF THE DISCLOSURE

Control devices for circuits are important in many electrical applications. For instance, various circuit breaker designs that are useful in numerous applications have been previously developed and disclosed.

In current aerospace power distribution systems, electrical loads are fed through a thermal circuit breaker and a power relay connected in-series, in order to provide load and wire protection (over-current or "OC") and load On/Off control (switching). Alternatively, a Solid State Power Controller (SSPC) may be used to perform these same functions.

The thermal circuit breaker/power relay solution has a long service history, but this combination can be bulky and labor intensive for installation and trouble shooting. The SSPC solution has also been successfully implemented and operated with favorable service history. However, SSPCs are not cost and/or volume effective for higher power loads, largely due to the fact such applications require a high number of metal-oxide-semiconductor field-effect transistors (MOSFETs).

By example, U.S. Patent No. 6,470,224 to Drake et al. discloses an aircraft power system including a SSPC disposed within a secondary power distribution assembly. Another example is U.S. Patent Application Publication No. 2013/0100567 to Reynolds et al., which discloses a system for protecting electrical power distribution circuits. Yet another example is U.S. Patent Application Publication No. 2013/0050880 to Rozman et al., which discloses a solid state power controller system.

US 2012/275071 A1 discloses an arc fault circuit interrupter in which a controller receives detection results and commands an actuation circuit.

US 2011/222200 A1 discloses a power controller in which a digital signal processor receives conditioned detection results and commands a coil driver.

US 4 346 424 A discloses a circuit breaker in which a controller receives processed detection results and controls a relay.

It is the object of the invention to provide a circuit breaker and a circuit protection method of versatile and quick operation.

This object is accomplished by the features of the independent claims.

### BRIEF SUMMARY OF THE DISCLOSURE

Disclosed is a circuit breaker according to claim 1 having an electrical relay and a control circuit. The electrical relay is effective to control the power flow of a power line. The control circuit has a load and wire protection ("OC") detection unit, a microprocessor and a driver. When an overload or short circuit condition is detected, the driver receives a command from the detection unit that the relay should stop the flow of power in the power line and, in return, the relay is caused to shut off power flow in the line, thus preventing or mitigating potential damage and/or harm.

There exists many different embodiments of the disclosed system, including many that have additional functionality to that discussed above. For instance, a redundant power supply can allow the relay and control circuit to operate without another source of power. A ground fault interrupt (GFI) detection unit can sense, and begin the response to, a ground fault condition. The microprocessor of the control circuit can actively control the circuit's operation, and in some embodiments, receive and communicate information with other components outside the disclosed system.

The disclosed subject matter presents several advantages.

One advantage of the disclosed subject matter is that it can be utilized with 1-phase Alternating Current (AC), 3-phase AC or 3-phase Direct Current (DC) power.

Another advantage is that utilization of the disclosed subject matter may decrease overall project costs, depending in part on the load rating of any particular implementation.

Yet another advantage of the disclosed subject matter is that it allows for the utilization of conventional, proven components such as off the shelf (OTS) power relays and control circuits. This may, in turn, result in schedule and project cost reductions.

Yet another advantage of the disclosed subject matter is that an over-current rating change only requires a software set-point change, given that the power relay should be compatible for the highest programmable VCB rating.

### BRIEF DESCRIPTION OF THE DRAWINGS

The foregoing summary, preferred embodiments, and other aspects of the subject matter of the present disclosure will be best understood with reference to a detailed description of specific embodiments, which follows, when read in conjunction with the accompanying drawings, in which:
Fig. 1 is a schematic diagram of an embodiment, having a power bus, relay, load and control circuit.
Fig. 2 is a schematic diagram of the embodiment of Fig. 1, having additional features such as a redundant board power supply and GFI detection function.
Fig. 3 is a schematic diagram of an embodiment having two relays, each connected to a dedicated driver.

Like reference numbers and designations in the various drawings indicate like elements. Arrows in the schematic drawings should be understood to represent logic pathways that are generally indicative of the flow direction of information or logic, and that such arrows do not necessarily represent traditional electrical pathways.

### DETAILED DESCRIPTION OF THE DISCLOSURE

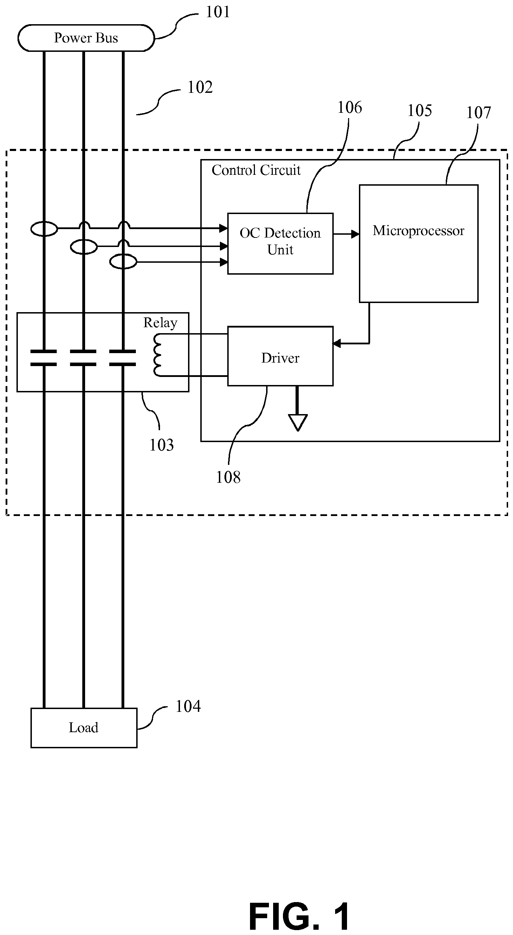

Fig. 1 is a schematic diagram of one embodiment VCB. A power bus 101, which may be a source of limited power, such as a generator on an aircraft, supplies an amount of power flow along power line **102,** which is in this embodiment carrying 3-phase AC power. It should be understood that the disclosed subject matter can be utilized with 1-phase AC and 3-phase AC power, as well as other power configurations, including without limitation 28VDC and 270VDC. Electrical relay **103** is effective to control this power flow. For example, relay **103** can allow power to flow from power bus **101** to load **104** or, inversely, prevent such flow. Various electrical relays are suitable for use with the disclosed subject matter, including by way of example commercially available OTS units. Control circuit **105** includes OC detection unit **106,** microprocessor **107** and driver **108.** Upon receipt of a deactivation command, driver **108** is effective to cause relay **103** to stop the flow of power in power line **102.** OC detection unit **106** is configured to monitor the power flow in power line **102** with, for example, a current sensor(s). OC detection unit **106** is capable of detecting whether a short circuit or overload condition exists. If one of these conditions is sensed, OC detection unit **106** causes driver **108** to receive a deactivation command, which, in turn, would cause the power flow in .power line **102** to be shut off, thereby preventing or limiting the damage or harm that might otherwise be caused by an overload or short circuit condition. Microprocessor **107** is configured to, at a minimum, be capable of receiving input from OC detection unit **106** and sending output to driver **108.** It is understood that microprocessor **107** may perform any number of additional functions, and may be programmable to operate and control the control circuit **105** in a variety of fashions.

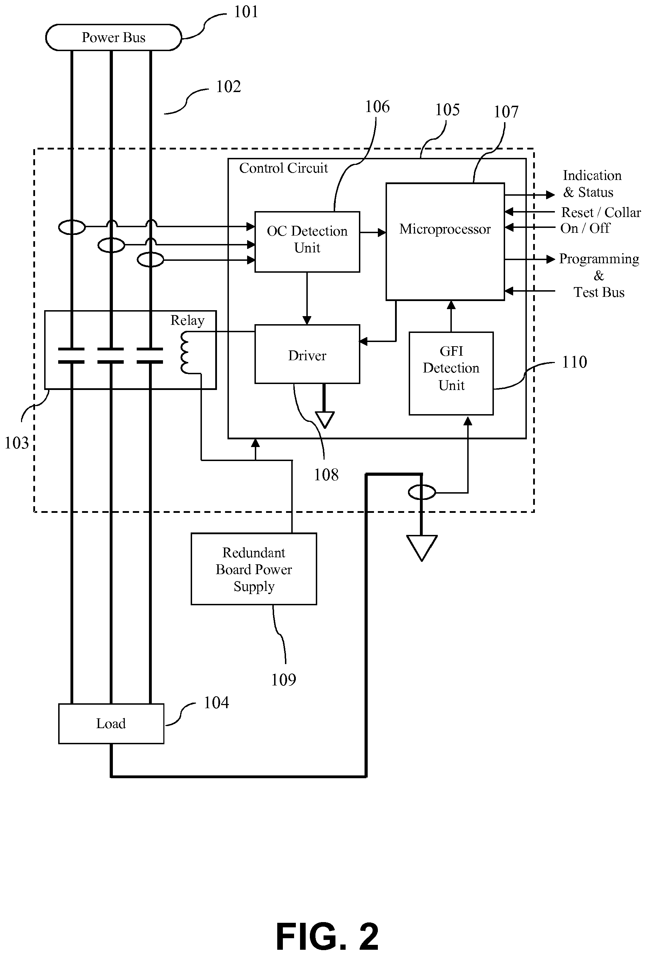

Fig. 2 is a schematic diagram of the embodiment of Fig. 1 having additional features and functionality. Redundant Board Power Supply **109** is connected to control circuit **105** and relay **103** and is effective to allow control circuit **105** and relay **103** to operate even when redundant board power supply is the only power source for these units. Such a redundant power supply increases overall system integrity and can help guard against unexpected power loss from other sources. This can be particularly important in applications, such as aircraft, where it is critical that system functionality be maintained even in the event of a loss of primary power.

In the embodiment of Fig. 2, microprocessor **107** is capable of sending and receiving various information outside of the control circuit. Such functionality may be useful in applications where control of the embodiment system by an outside entity, for instance a flight officer of an aircraft, is advantageous or required. In the embodiment, indication and status information is sent outside of the embodiment system. This information, by way of example, may be recorded, viewed, analyzed or otherwise manipulated. For example, a visual control panel in the cockpit of an aircraft could indicate to a flight officer that the embodiment system is operating effectively. It is understood that there are many human interface schemes, for example, flight deck multifunction displays (MFDs), capable of being utilized with the disclosed subject matter and which will be apparent to those of skill in the art to which the present disclosure pertains.

In the embodiment of Fig. 2, microprocessor **107** is effective to receive "reset," "collar," "on," and "off" commands from outside of the embodiment system. This allows the embodiment system, and thus the power flow in power line **102,** to be controlled remotely, either automatically or by a human operator. For instance, upon receipt of an "off' command by the microprocessor, the microprocessor may cause driver **108** to receive a deactivation command and thereby cause relay **103** to shut off power flow in power line **102.**

In the embodiment of Fig. 2, microprocessor **107** is effective to communicate with a programming and test bus. This allows for the embodiment virtual circuit breaker to be tested to ensure correct operation, and in certain embodiments, for the circuit to be programmed with various settings and/or for various tasks. For example, the threshold for determining that an overload condition existed in the circuit could be raised, to for example, account for an unusual or increased amount of noise in power line **102.** It should be understood that microprocessor **107** may receive input from various input devices, such as control panels, keyboards, etc.

The embodiment depicted by Fig. 2 includes GFI detection unit **110.** In the particular embodiment, the GFI detection unit **110** is integrated with control circuit **105,** but could optionally be not integrated. GFI detection unit **110** is effective to, when it senses that a ground fault condition has occurred, communicate to the microprocessor that such a condition has occurred. This allows the embodiment system to detect and react to ground fault conditions. In an embodiment, an arc fault detection and protection algorithm can be programmed into the microprocessor. In another embodiment, GFI protection can be added by including an additional current sensor (i.e., current transformer or hall effect sensor).

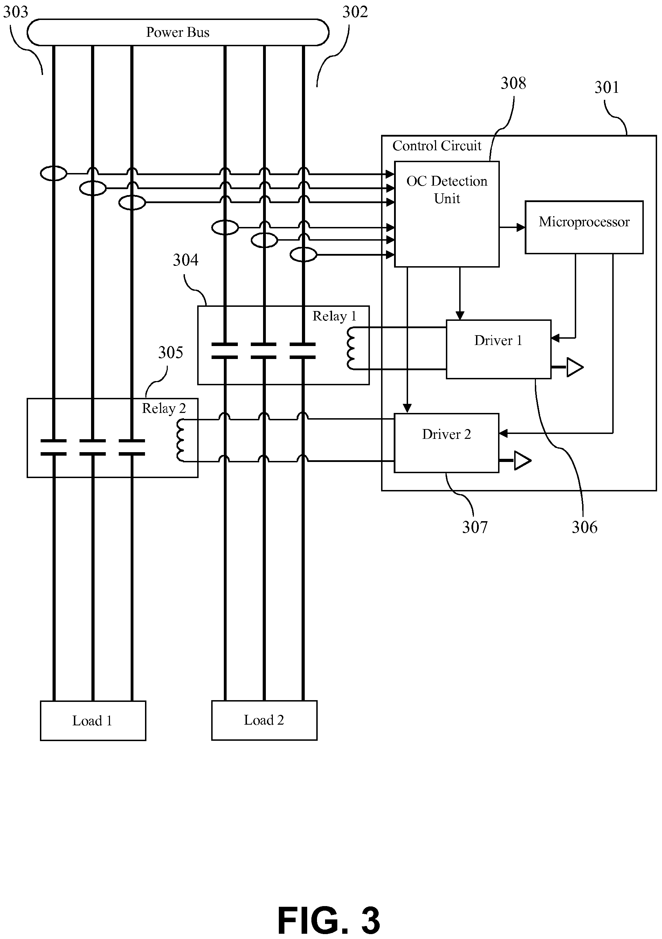

Fig. 3 is a schematic depiction of an embodiment in which a single control circuit **301** operates to control the power flow in both first power line **302** and second power line **303.** In the embodiment, first relay **304** is effective to control the flow of power in first power line **302.** Similarly, second relay **305** is effective to control the flow of power in second power line **303.** First driver **306** is effective to cause first relay **304** to stop the flow of power in first power line **302** upon receipt by first driver **306** of a deactivation command. Similarly, second driver **307** is effective to cause second relay **305** to stop the flow of power in second power line **303** upon receipt by second driver **307** of a deactivation command. OC detection unit **308** monitors both first power line **302** and second power line **303** and is effective to cause first driver **306** or second driver **307** to receive a deactivation command if a current overflow or short circuit condition is detected in first power line **302** or second power line **303,** respectively. As illustrated by the embodiment depicted by Fig. 3, components utilized in practicing the disclosed subject matter need not have one-to-one relationships with one another or exist only in single units.

It should be understood that various components of the disclosed subject matter may communicate with one another in various manners. For instance, components may communicate with one another via a wire or, alternatively, wirelessly and by electrical signals or via digital information. It is noted that PWB may be utilized in the construction of many embodiments.

## Claims

1. A circuit breaker, comprising:
an electrical relay (103, 304) effective to control an amount of power flow;
a control circuit (105, 301), having an OC detection unit (106, 308), a microprocessor (107) and a driver (108, 306);
said driver (108, 306) effective to cause said relay (103, 304) to stop said power flow upon receipt by the driver (108, 306) of a deactivation command;
said OC detection unit (106, 308) configured to monitor said power flow;
said OC detection unit (106, 308) being connected to the driver (108, 306) and being effective to cause said driver to receive a deactivation command if said OC detection unit (106, 308) senses that an overload condition exists; and
said microprocessor (107) configured to be capable of receiving input from said OC detection unit (106, 308) and sending output to said driver (108, 306), wherein said circuit breaker is located on an aircraft and said microprocessor (107) is adapted to receive at least one of "reset," "collar," "on" or "off' commands from a control panel in said aircraft; the circuit breaker is **characterised in that** the OC detection unit (106, 308) is directly connected to the driver (108, 306).

2. The circuit breaker of claim 1 wherein said power flow is selected from the group consisting of 1-phase alternating current (AC), 3-phase AC and direct current (DC).

3. The circuit breaker of claim 2 wherein said power flow is 1-phase AC.

4. The circuit breaker of claim 1 wherein said microprocessor (107) is effective to send to outside said control circuit (105, 301) an amount of indication and status information.

5. The circuit breaker of claim 1 wherein said microprocessor (107) is effective to cause said driver (108, 306) to receive a deactivation command upon receipt by the microprocessor (107) of an "off" command.

6. The circuit breaker of claim 1 wherein said microprocessor (107) is effective to communicate with a programming and test bus.

7. The circuit breaker of claim 1, further comprising a redundant source of power (109) effective to allow said control circuit (105, 301) and said relay (103, 304) to operate while only receiving power from said redundant source of power (109).

8. The circuit breaker of claim 1 further comprising a ground fault interruption (GFI) detection unit (110).

9. The circuit breaker of claim 9 wherein said GFI detection unit (110) is effective to, when the GFI detection unit (11) senses that a ground fault condition has occurred, communicate to said microprocessor (107) that a ground fault condition has occurred.

10. The circuit breaker of claim 9 wherein said GFI detection unit (110) is integrated with said control circuit (105, 301).

11. An electrical system for an aircraft, comprising
a source of limited power;
a load (104), drawing an amount of power flow from said source of limited power; and
a circuit breaker in accordance with claim 1.

12. The electrical system of claim 11, wherein said source of limited power is an aircraft engine.

13. The electrical system of claim 12, wherein said load (104) is the actuator mechanism of an aircraft control surface.

14. A method of protecting an electronic circuit, comprising the steps of:
providing a power flow;
providing a circuit breaker in accordance with claim 1;
said microprocessor (107) receiving input from said OC detection unit (106, 308) and sending output to said driver (108, 306),
monitoring said power flow utilizing said OC detection unit (106, 308); and
causing said driver (108, 306) to receive from said OC detection unit (106, 308) a deactivation command when an overload condition is sensed.

## Patentansprüche

1. Lasttrennschalter, der umfasst:
ein elektrisches Relais (103, 304), das wirksam ist, um die Menge eines Stromflusses zu steuern;
eine Steuerschaltung (105, 301), die eine OC-Erfassungseinheit (106, 308), einen Mikroprozessor (107) und einen Treiber (108, 306) aufweist;
wobei der Treiber (108, 306) wirksam ist, um auf den Empfang eines Deaktivierungsbefehls durch den Treiber (108, 306) zu veranlassen, dass das Relais (103, 304) den Stromfluss stoppt;
wobei die OC-Erfassungseinheit (106, 308) so konfiguriert ist, dass sie den Stromfluss überwacht;
wobei die OC-Erfassungseinheit (106, 308) mit dem Treiber (108, 306) verbunden ist und wirksam ist, um zu veranlassen, dass der Treiber einen Deaktivierungsbefehl empfängt, wenn die OC-Erfassungseinheit (106, 308) feststellt, dass ein Überlastzustand vorliegt; und
wobei der Mikroprozessor (107) so konfiguriert ist, dass er in der Lage ist, eine Eingabe von der OC-Erfassungseinheit (106, 308) zu empfangen und eine Ausgabe an den Treiber (108, 306) zu senden,
wobei der Lasttrennschalter in einem Flugzeug angeordnet ist und der Mikroprozessor (107) so ausgelegt ist, dass er mindestens einen der Befehle "Rücksetzen", "Festhalten", "Ein" oder "Aus" von einem Bedienfeld in dem Flugzeug empfängt;
wobei der Lasttrennschalter **dadurch gekennzeichnet ist, dass** die OC-Erfassungseinheit (106, 308) direkt mit dem Treiber (108, 306) verbunden ist.

2. Lasttrennschalter nach Anspruch 1, wobei der Stromfluss aus der Gruppe gewählt ist, die aus einem einphasigen Wechselstrom (AC), einem dreiphasigen Wechselstrom (AC) und einem Gleichstrom (DC) besteht.

3. Lasttrennschalter nach Anspruch 2, wobei der Stromfluss ein einphasiger Wechselstrom ist.

4. Lasttrennschalter nach Anspruch 1, wobei der Mikroprozessor (107) wirksam ist, um eine Menge von Anzeige- und Statusinformationen nach außerhalb der Steuerschaltung (105, 301) zu senden.

5. Lasttrennschalter nach Anspruch 1, wobei der Mikroprozessor (107) wirksam ist, um zu veranlassen, dass der Treiber (108, 306) einen Deaktivierungsbefehl empfängt, wenn der Mikroprozessor (107) einen "Aus"-Befehl empfängt.

6. Lasttrennschalter nach Anspruch 1, wobei der Mikroprozessor (107) wirksam ist, um mit einem Programmier- und Testbus zu kommunizieren.

7. Lasttrennschalter nach Anspruch 1, der ferner eine redundante Stromquelle (109) umfasst, die wirksam ist, um den Betrieb der Steuerschaltung (105, 301) und des Relais (103, 304) zu ermöglichen, während sie Strom nur von der redundanten Stromquelle (109) erhalten.

8. Lasttrennschalter nach Anspruch 1, der ferner eine Erdschlussunterbrechungs-Erfassungseinheit (GFI-Erfassungseinheit) (110) umfasst.

9. Lasttrennschalter nach Anspruch 9, wobei die GFI-Erfassungseinheit (110) wirksam ist, um dem Mikroprozessor (107) mitzuteilen, dass ein Erdschlusszustand aufgetreten ist, wenn die GFI-Erfassungseinheit (11) feststellt, dass ein Erdschlusszustand aufgetreten ist.

10. Lasttrennschalter nach Anspruch 9, wobei die GFI-Erfassungseinheit (110) in die Steuerschaltung (105, 301) integriert ist.

11. Elektrisches System für ein Flugzeug, umfassend:
eine Quelle mit begrenzter Leistung;
eine Last (104), die eine Stromflussmenge aus der Quelle mit begrenzter Leistung entnimmt; und
einen Lasttrennschalter nach Anspruch 1.

12. Elektrisches System nach Anspruch 11, wobei die Quelle mit begrenzter Leistung ein Flugzeugtriebwerk ist.

13. Elektrisches System nach Anspruch 12, wobei die Last (104) der Stellgliedmechanismus einer Flugzeugsteuerfläche ist.

14. Verfahren zum Schutz einer elektronischen Schaltung, das die folgenden Schritte umfasst:
Bereitstellung eines Stromflusses;
Bereitstellung eines Lasttrennschalters nach Anspruch 1;
wobei der Mikroprozessor (107) eine Eingabe von der OC-Erfassungseinheit (106, 308) empfängt und eine Ausgabe an den Treiber (108, 306) sendet,
Überwachung des Stromflusses unter Verwendung der OC-Erfassungseinheit (106, 308); und
Veranlassen, dass der Treiber (108, 306) von der OC-Erfassungseinheit (106, 308) einen Deaktivierungsbefehl empfängt, wenn ein Überlastzustand erfasst wird.

## Revendications

1. Coupe-circuit comprenant :
un relais électrique (103, 304) efficace pour commander une quantité de flux de puissance ;
un circuit de commande (105, 301) ayant une unité de détection de surintensité (OC) (106, 308), un microprocesseur (107) et un pilote (108, 306) ;
ledit pilote (108, 306) efficace pour amener ledit relais 103, 304) à arrêter ledit flux de puissance lors de la réception par le pilote (108, 306) d'une commande de désactivation ;
ladite unité de détection OC (106, 308) configurée pour surveiller ledit flux de puissance ;
ladite unité de détection (106, 308) étant connectée au pilote (108, 306) et étant efficace pour amener ledit pilote à recevoir une commande de désactivation si ladite unité de détection OC (106, 308) détecte qu'une condition de surcharge existe, et
ledit microprocesseur (107) configuré pour être capable de recevoir une entrée depuis ladite unité de détection OC (106, 308) et pour envoyer une sortie vers ledit pilote (108, 306),
dans lequel le coupe-circuit est situé sur un avion et ledit microprocesseur (107) est adapté pour recevoir au moins une commande parmi les commandes « Reset », « Collar », « On » et « Off » depuis un panneau de commande dans ledit avion ; le coupe-circuit est **caractérisé en ce que** l'unité de détection OC (100, 308) est directement connectée au pilote (108, 300).

2. Coupe-circuit selon la revendication 1, dans lequel ledit flux de puissance est sélectionné parmi le groupe constitué de : courant alternatif monophasé (CA), CA triphasé et courant continu (CC).

3. Coupe-circuit selon la revendication 2, dans lequel ledit flux de puissance est un CA monophasé.

4. Coupe-circuit selon la revendication 1, dans lequel ledit microprocesseur (107) est efficace pour envoyer vers l'extérieur dudit circuit de commande (105; 301) une quantité d'indications et une information d'état.

5. Coupe-circuit selon la revendication 1, dans lequel ledit microprocesseur (107) est efficace pour amener ledit pilote (108, 306) à recevoir une commande de désactivation lors d'une réception par le microprocesseur (107) d'une commande « arrêt ».

6. Coupe-circuit selon la revendication 1, dans lequel ledit microprocesseur (107) est efficace pour communiquer avec un bus de programmation et de test.

7. Coupe-circuit selon la revendication 1, comprenant en outre une source redondante de puissance (109) efficace pour permettre audit circuit de commande (105, 301) et audit relais (103, 304) de fonctionner tout en recevant uniquement une puissance depuis ladite source redondante de puissance (109).

8. Coupe-circuit selon la revendication 1, comprenant en outre une unité de détection d'interruption de défaut à la terre (GFI) (110).

9. Selon la revendication 9, dans lequel ladite unité de détection GFI (110) est efficace pour, quand l'unité de détection GFI (110) détecte qu'une condition de défaut à la terre est survenue, communiquer audit microprocesseur (107) qu'une condition de défaut à la terre est survenue.

10. Coupe-circuit selon la revendication 9, dans lequel ladite unité de détection GFI (110) est intégrée audit circuit de commande (105, 301).

11. Système électrique pour un avion, comprenant :
une source de puissance limitée ;
une charge (104), tirant une quantité de flux de puissance depuis ladite source de puissance limitée ; et
un coupe-circuit selon la revendication 1.

12. Système électrique selon la revendication 11, dans lequel ladite source de puissance limitée est un moteur d'avion.

13. Système électrique selon la revendication 12, dans lequel ladite charge (104) est le mécanisme d'actionneur d'une surface de commande d'avion.

14. Procédé pour protéger un circuit électronique, comprenant les étapes consistant à :
fournir un flux de puissance ;
fournir un coupe-circuit selon la revendication 1 ;
ledit microprocesseur (107) recevant une entrée depuis ladite unité de détection OC (106, 308), et envoyant une sortie audit pilote (108, 306),
surveiller ledit flux de puissance en utilisant ladite unité de détection OC (106, 308) ; et
amener ledit pilote (108, 306) à recevoir depuis l'unité de détection OC (106, 308) une commande de désactivation quand une condition de surcharge est détectée.
